# EUROPÄISCHE PATENTSCHRIFT

(11) **EP 1 326 014 B1**
(45) Veröffentlichungstag und Bekanntmachung des Hinweises auf die Patenterteilung: **10.08.2005**
(21) Anmeldenummer: 02027603.6
(22) Anmeldetag: 10.12.2002
(51) Int. Cl.: F02B 23/06, F02B 23/10, F02B 3/06

(54) **Selbstzündende direkteinspritzende Brennkraftmaschine**
Auto-ignition direct injection combustion engine
Moteur à injection directe à allumage spontané

(30) Priorität: 10.12.2001 DE 10160561
(43) Veröffentlichungstag der Anmeldung: 09.07.2003
(73) Patentinhaber: Gruber, Georg, 90584 Allersberg (DE); Dotzer, Alois, 90584 Allersberg (DE); Kaiser, Thomas, D-80798 München (DE)
(72) Erfinder: Gruber, Georg, 90584 Allersberg (DE); Dotzer, Alois, 90584 Allersberg (DE); Kaiser, Thomas, D-80798 München (DE)

(56) Entgegenhaltungen:
- EP-A- 0 909 893
- DE-A- 1 526 313
- GB-A- 2 169 656

## Beschreibung

Die Erfindung geht aus von einem Verfahren zum Einspritzen von Kraftstoff nach dem Oberbegriff des einzigen Anspruchs.

Bei selbstzündenden, direkteinspritzenden Brennkraftmaschinen werden immer häufiger anstatt von Einstrahldüsen sogenannte Vielstrahldüsen zum Einspritzen des Kraftstoffes verwendet. Diese Vielstrahldüsen weisen einen Kranz von Bohrungen auf, die sich etwa in gleicher Höhe befinden und mit denen versucht wird, den Kraftstoff rotationssymmetrisch in den ebenfalls rotationssymmetrischen Brennraum einzubringen.

Die DE-A-1 526 313 zeigt eine Vielstrahldüse, bei der die Löcher so angeordnet sind, dass sie steilere und flachere Strahlen auf Kolben und Kolbenboden auftragen. Bei den flacheren Strahlen, die tangential auf den Kolbenboden aufgespritzt werden, besteht die Gefahr, dass unverbrannter Kraftstoff durch den Spalt zwischen Kolben und Zylinderwand gedrückt wird und dies zur Verdünnung des Schmieröls und zum Verkoken der Kolbenringnuten führen kann.

Im Allgemeinen soll bei Vielstrahldüsen durch die Vielzahl winziger Düsenbohrungen erreicht werden, dass sich rings um die Einspritzdüse ein feinstverteilter Kraftstoffnebel bildet. Es hat sich jedoch herausgestellt, dass bei der Verwendung zäher Kraftstoffe trotz kleiner Bohrungsdurchmesser und hoher Einspritzdrücke die durch die Düsenbohrungen austretenden Kraftstoffstrahlen nicht vollständig aufgerissen werden, sondern in Form eines Sprühkegels auf den Kolben oder die Zylinderwand auftreffen. Dies führt zu den bekannten und ungewollten Eigenschaften wie schlechte Starteigenschaften, Blaurauch, verstärkte Rußbildung, Belastung des Schmieröls und Verkokung des Brennraumes.

Es war daher die Aufgabe der Erfindung, ein Verfahren zum Einspritzen von Kraftstoff in eine selbstzündende, direkteinspritzende Brennkraftmaschine so zu verändern, dass mit den üblichen Vielstrahldüsen ohne zusätzliche Erhöhung des Einspritzdruckes die Verbrennungseigenschaften der Brennkraftmaschine optimiert werden können.

Gelöst wird die Aufgabe durch ein Verfahren zum Einspritzen von Kraftstoff mit den Merkmalen des einzigen Anspruchs. Die Erfindung macht sich dabei die Erkenntnis zunutze, dass das Strahlauftreffbild einer Vielstrahldüse auf einem Kolben sichtbar gemacht werden kann. Hierzu wird eine Brennkraftmaschine nach Erreichen der Betriebstemperatur unter Last gleichmäßig für ca. 10 Minuten betrieben. Nach dieser Zeit wird die Brennkraftmaschine durch Stoppen der Kraftstoffzufuhr unter Last schlagartig abgeschaltet. Nach dem Öffnen des Motors läßt sich das Strahlauftreffbild auf dem Kolben als gut erkennbarer Schatten identifizieren.

Es hat sich nun überraschenderweise herausgestellt, dass die Verbrennung optimiert werden kann, wenn bei jedem Kolben wenigstens ein Strahlauftreffbild eines Strahles einer Vielstrahldüse so ausgebildet ist, dass der Brennraumrand des Kolbens das Strahlauftreffbild so teilt, dass sich die beiden Flächen ober- und unterhalb des Brennraumrandes um nicht mehr als 30% unterscheiden.

Idealerweise trifft diese Bedingung nicht nur für das Strahlauftreffbild einer Bohrung jeder Vielstrahldüse zu, sonder für mehrere Bohrungen, die möglichst gleichmäßig über 360° verteilt sind.

Die Erfindung wird anhand eines Ausführungsbeispiels mit Hilfe der Zeichnung eingehend erläutert:

Es zeigen:
- Fig. 1: die schematische Darstellung der Erfindung in einer Brennkraftmaschine mit schrägstehender Vielstrahleinspritzdüse und
- Fig. 2: eine Aufsicht auf einen Kolben nach Fig. 1 mit einer senkrechtstehenden Vielstrahleinspritzdüse.

Der rotationssymmetrische Kolben 1 weist eine ebenfalls rotationssymmetrische Kolbenmulde 2 mit einer Brennraumwand 9 auf. Der Kolben wird an seiner Oberseite durch den Kolbenboden 7 abgeschlossen. In seinem oberen Bereich sind ringförmige Nuten 8 für die nicht dargestellten Kolbenringe vorgesehen.

Die Brennraumwand 9 und der Kolbenboden 7 laufen am Brennraumrand 5 zusammen. Dieser Übergang kann relativ scharf als Kante aber auch als Rundung ausgebildet sein.

Die schräg in den Zylinder ragende Vielstrahleinspritzdüse 6 weist eine kranzförmige Anordnung von Bohrungen 4 auf. Der Kraftstoff tritt als Sprühkegel 3 aus jeder Bohrung aus und trifft auf den Kolben auf. Die von dem Sprühkegel getroffene Fläche auf dem Kolbenboden 7 ist in der Zeichnung mit a, die auf der Brennraumwand 9 getroffene Fläche mit b bezeichnet.

Eine erhebliche Verbesserung der Brenneigenschaften läßt sich nun erreichen, wenn sich bereits bei einer Bohrung jeder Vielstrahldüse die Flächen a und b um nicht mehr als 30% unterscheiden. Feststellen läßt sich dies an dem Strahlauftreffbild des Kolbens. Die Erzeugung dieses Strahlauftreffbildes läßt sich über die Einstellung verschiedener Parameter erreichen. Beispielhaft sind hier der Vorstand der Einspritzdüse, der Einspritzzeitpunkt und die Einspritzdauer zu nennen. Ausschlaggebend für das Strahlbild sind aber ebenso Form und Winkel der Düsenbohrungen.

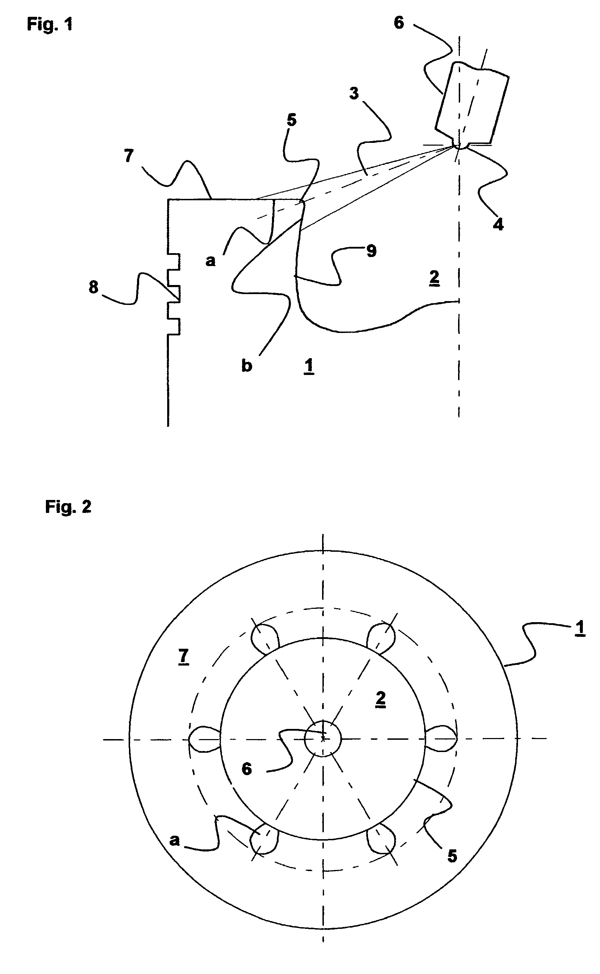

Fig. 2 zeigt einen Kolben mit einer senkrecht und zentrisch in den Brennraum 2 ragenden Vielstrahldüse 6 und einem idealen Strahlauftreffbild. Auf dem Kolbenboden 7 sind sechs Flächen a zu sehen, deren Größe und Form in etwa identisch sind.

Vorteilhafterweise sollten auch die vier nicht sichtbaren Flächen b auf der Brennraumwand unter sich gleich sein und möglichst die gleiche Fläche wie a aufweisen. Wie oben bereits erwähnt, ergibt sich aber bereits eine enorme Verbesserung der Verbrennung, wenn nur bei einer Bohrung pro Einspritzdüse und Zylinder keine zu großen Unterschiede zwischen den Flächen a und b bestehen.

## Patentansprüche

1. Verfahren zum Einspritzen von Kraftstoff in eine selbstzündende, direkteinspritzende Brennkraftmaschine mit wenigstens einem Zylinder und einem Kolben (1) mit Brennraummulde (2), Brennraumrand (5) und Kolbenboden (7), wobei der Kraftstoff über eine Vielstrahldüse (6) eingespritzt wird, und der Einspritzzeitpunkt und der Abstand der Vielstrahldüse zum Kolben (1) im oberen Totpunkt so eingestellt werden, dass das Strahlauftreffbild wenigstens eines Strahls der Vielstrahldüse (6) sowohl oberhalb als auch unterhalb des Brennraumrandes (5) liegt, **dadurch gekennzeichnet, dass** sich die Flächen des Strahlauftreffbildes oberhalb (a) und unterhalb (b) des Brennraumrandes (5) um weniger als 30 % unterscheiden.

## Claims

1. Process for injecting fuel into a self-igniting, direct-injecting internal combustion engine with at least one cylinder and one piston (1) with combustion chamber recess (2), combustion chamber boundary (5) and piston top (7), with the fuel being injected through a multipoint injection nozzle (6) and the instant of injection and the distance of the multipoint injection nozzle from the piston (1) in the top dead center are adjusted in such a way that the spray impact pattern of at least one spray of the multipoint spray nozzle (6) is both above and below the combustion chamber boundary (5), **characterized by** the fact that the surfaces of the spray impact pattern above (a) and below (b) the combustion chamber boundary (5) are different from each other by less than 30%.

## Revendications

1. Procédé pour injecter du carburant dans un moteur à combustion interne à allumage spontané et à injection directe avec au moins un cylindre et un piston (1) avec une cavité de chambre de combustion (2), un rebord de chambre de combustion (5) et une tête de piston (7), où cependant le carburant est injecté par un injecteur Multi jets (6) et le point d'injection et la distance de l' injecteur Multi jets par rapport au piston (1) sont réglés au point mort haut de sorte que l'image de l'impact du jet d'au moins un jet de l'injecteur Multi jets (6) se trouve aussi bien au-dessus qu'en dessous du rebord de la chambre de combustion (5) étant **caractérisée par le fait que** les surfaces de l'image de l'impact du jet au-dessus (a) et en dessous (b) du rebord de la chambre de combustion (5) se différencient de moins de 30 %.
